# EUROPEAN PATENT APPLICATION

(11) **EP 3 581 008 A1**
(43) Date of publication of application: **18.12.2019**
(21) Application number: 19180389.9
(22) Date of filing: 14.06.2019
(51) Int. Cl.: A01B 59/042, B60D 1/46

(54) **DEVICE FOR THE CONNECTION OF A TOWING VEHICLE TO A TRAILER**

(30) Priority: 15.06.2018 IT 201800006368
(71) Applicant: CBM - S.P.A., 41122 Modena (IT)
(72) Inventor: Cornia, Enrico Maria, 41122 Modena (IT)
(74) Representative: Zoli, Filippo

(57) **Abstract**

The device (1) for the connection of a towing vehicle to a trailer, comprises: at least one base frame (2) associable with a towing vehicle; at least one attachment portion (3) which is adapted to engage with a trailer and associated movable in a sliding manner with the base frame (2) along at least one adjustment direction (4); detachable blocking means for blocking the position of the attachment portion (3) with the base frame (2) along the adjustment direction (4); wherein it comprises at least one actuating assembly (9) of the attachment portion (3) associated with the base frame (2) and provided with motor means (10) kinematically connected to the attachment portion (3) to command the movement thereof along the adjustment direction (4).

## Description

The present invention relates to a device for the connection of a towing vehicle to a trailer.

As is known, in the agricultural sector, towing vehicles are generally associated with trailers of various types adapted to perform various types of functions. Since the trailers used can have different conformations, the towing vehicles are provided with connection devices able to adapt to the type of trailer used.

In particular, trailers differ as regards the shape of the means of attachment to the towing vehicle and the height of the means of attachment themselves off the ground.

The towing vehicle-trailer connection devices of known type are therefore provided with a base frame which can be associated with the towing vehicle and with an attachment portion, adapted to engage with the trailer, associated moving vertically with the base frame in such a way as to be able to adjust its height so that it adapts to the relevant trailer.

Known types of connection devices also comprise removable blocking means of the attachment portion for attaching to the base frame.

More in detail, the blocking means comprise a plurality of holes, separated from one another, defined on the base frame and into which can be inserted in a removable way a number of blocking elements associated with the attachment portion.

Currently, the attachment portion of known connection devices is moved manually, i.e. it is lifted and lowered by the operator's physical effort only. These known towing vehicle-trailer connection devices have a number of drawbacks, comprising the fact that the manual movement of the attachment portion is generally very difficult, since it can reach a weight of 40 kg.

As can be easily appreciated, the adjustment of the height of the attachment portion is a particularly difficult operation from a physical point of view and can cause injuries and physical problems for the operator who performs it. Another drawback of known connection devices is the fact that the movement of the blocking means is particularly difficult, inasmuch as this operation must be carried out while at the same time supporting the attachment portion.

The physical effort required to move the attachment portion makes the use of the towing vehicle-trailer connection devices of known type limited to people with a suitable build, so physically slighter people or women, whose presence in the agricultural sector has become increasingly more frequent, are particularly at a disadvantage when carrying out this activity.

The main aim of the present invention is to devise a device for the connection of a towing vehicle to a trailer which allows facilitating the movement of the attachment portion with respect to connection devices of known type.

Within this aim, one object of the present invention is to devise a towing vehicle-trailer connection device which is flexible in use, or which can also be used by persons of thin build or by women.

Another object of the present invention is to make the operation of the blocking means of the attachment portion to the base frame easier.

A further object of the present invention is to devise a device for the connection of a towing vehicle to a trailer which allows overcoming the aforementioned drawbacks of the prior art in a simple, rational, easy, effective to use and low cost solution.

The objects set forth above are achieved by the present device for the connection of a towing vehicle to a trailer having the characteristics of claim 1.

Other characteristics and advantages of the present invention will become more evident from the description of a preferred but not exclusive embodiment of a device for the connection of a towing vehicle to a trailer, illustrated by way of non-limitative example in the accompanying tables of drawings in which:
Figure 1 is an axonometric view of a first embodiment of the device according to the invention;
Figure 2 is a detail of Figure 1 according to the invention;
Figure 3 is a sectional view of a detail of Figure 1 according to the invention;
Figure 4 is an axonometric view of the first embodiment of the device according to the invention, with the attachment portion in raised position;
Figure 5 is an axonometric view of the first embodiment of the device according to the invention, with the actuating assembly in the home position;
Figure 6 is an axonometric view of the device in a second embodiment according to the invention.

With particular reference to these figures, reference numeral 1 globally indicates a device for the connection of a towing vehicle to a trailer.

The device 1 comprises a base frame 2 associable with a towing vehicle, preferably an earth-moving machine or an agricultural tractor.

The device 1 also comprises at least one attachment portion 3, which is adapted to engage with a trailer and is associated movable in a sliding manner with the base frame 2 along an adjustment direction 4.

More in detail, the attachment portion 3 comprises engagement means 5 connectable to the trailer.

Preferably, the adjustment direction 4 extends vertically.

The device 1 also comprises detachable blocking means 6, which can be activated to lock the position of the attachment portion 3 with respect to the base frame 2 along the adjustment direction 4.

In particular, the blocking means 6 comprise a plurality of holes 7, obtained on the base frame 2 and arranged at different heights, and at least one blocking element, not shown in detail in the illustrations, associated with the attachment portion 3 and insertable in a removable manner inside the holes 7 to lock the position of the attachment portion 3 with respect to the base frame 2. The blocking element can therefore be moved between a retracted configuration, wherein it is disengaged from the holes 7, and an extended configuration, wherein it can be engaged with the holes 7 as a result of their mutual alignment. In the embodiments shown in the illustrations, the base frame 2 comprises two uprights 8 extending substantially vertically, opposite one another, on which pluralities of pairs of holes 7 are defined. The holes 7 of each of these pairs are therefore facing each other and the attachment portion 3 supports a pair of blocking elements, each of which is adapted to insert itself inside a relative hole 7.

According to the invention, the device 1 also comprises at least one actuating assembly 9, which is associated with the base frame 2 and is provided with motor means 10 kinematically connected to the attachment portion 3 to command the movement thereof along the adjustment direction 4. Advantageously, the motor means 10 comprise at least one electric motor 11. Conveniently, the actuating assembly 9 comprises at least one rotating element 12 operatively connected to the motor means 10, which are adapted to operate in rotation the rotating element 12 around a relevant axis.

Furthermore, the actuating assembly 9 comprises a pulling element 13, associated with the rotating element 12 and adapted to operate in conjunction with the attachment portion 3.

Therefore, due to the operation of the motor means 10, the rotating element 12 is adapted to wind/unwind the pulling element 13.

More in detail, due to the winding and the unwinding of the pulling element 13, the lifting and lowering of the attachment portion 3 is obtained respectively. The possibility of using motor means 10 of a different type cannot also be ruled out.

It is specified that, in the present treatise, the term "pulling element" means any means adapted to support and transmit driving loads.

In the specific example of application in the illustrations, such pulling element 13 is of the type of a cable with a substantially circular cross-section, however, the possibility cannot be ruled out of using different elements such as, for example, flattened cross-section strips or cables obtained by intertwining a plurality of cables with a small cross-section.

Advantageously, the attachment portion 3 comprises anchoring means 14 of the pulling element 13.

The anchoring means 14 are therefore adapted to mechanically connect the pulling element 13 to the attachment portion 3, so as to allow the transfer of motion from one to the other.

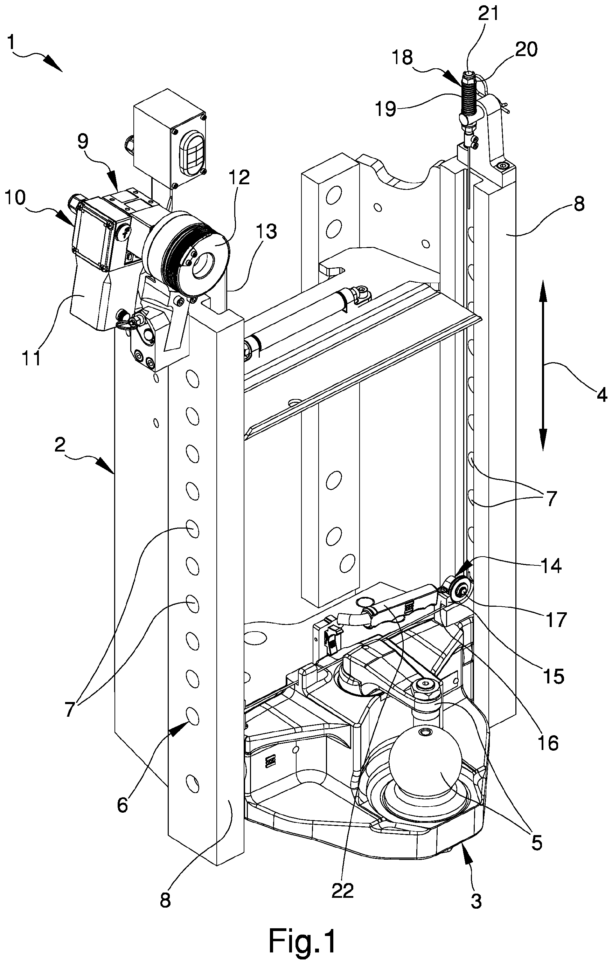

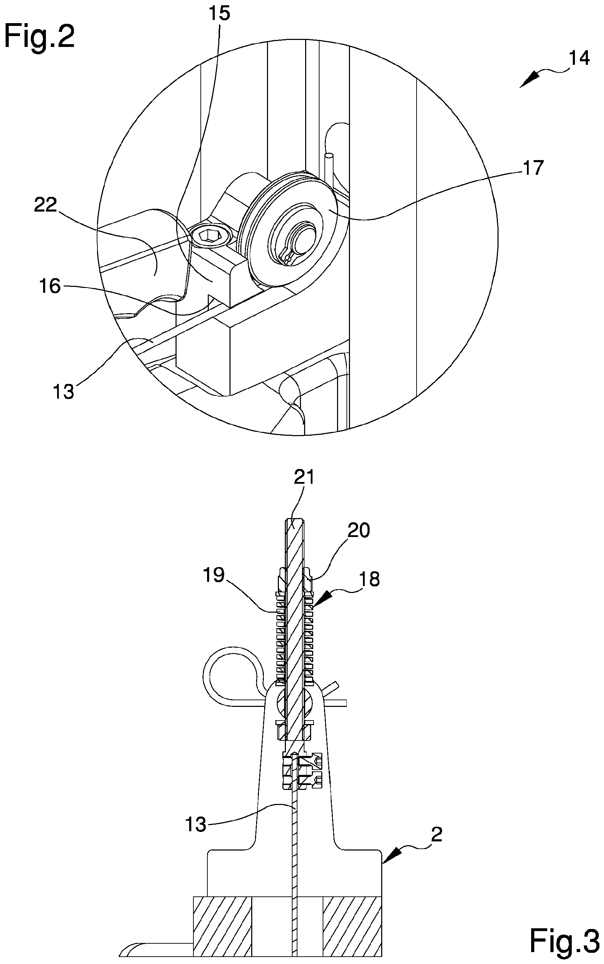

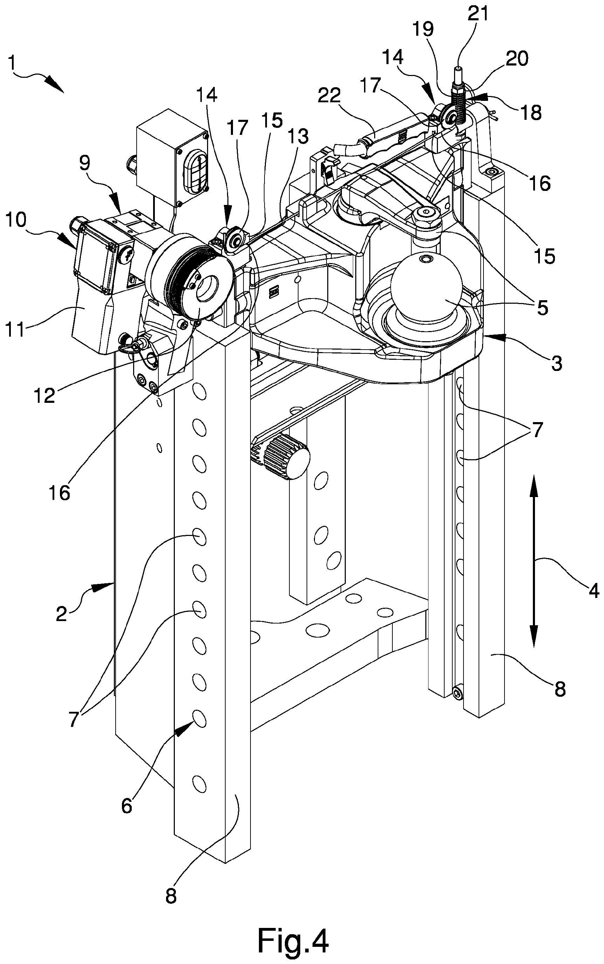

According to the embodiment shown in the Figures 1, 2, 4 and 5, the anchoring means 14 comprise at least one attachment element 15, locked together with the attachment portion 3, and defining at least one abutment surface 16 against which rests the pulling element 13 during the winding controlled by the rotating element 12. During the winding of the pulling element 13, the latter then rests against the abutment surface 16, thus exerting a force on it and causing the lifting thereof.

More particularly, the attachment element 15 is substantially C-shaped and defines a housing seat for the pulling element 13, the wall of which delimiting it above defines the abutment surface 16.

Appropriately, the anchoring means 14 comprise at least one pair of attachment elements 15 arranged on opposite sides with respect to a median plane of the attachment portion.

Furthermore, the anchoring means 14 comprise at least one supporting element 17 associated movable in rotation with the attachment portion 3 around a relative axis.

This supporting element 17 engages with the pulling element 13 and rotates around its axis as a result of the winding/unwinding of the pulling element 13 itself.

More particularly, the anchoring means 14 comprise at least one pair of supporting elements 17 arranged on opposite sides with respect to the median plane of the attachment portion 3.

The possibility of making one or more supporting elements 17 of different types, for example non-rotating, cannot however be ruled out.

In the first embodiment of Figures 1, 2, 4 and 5, the supporting elements 17 are separate from the attachment elements 15.

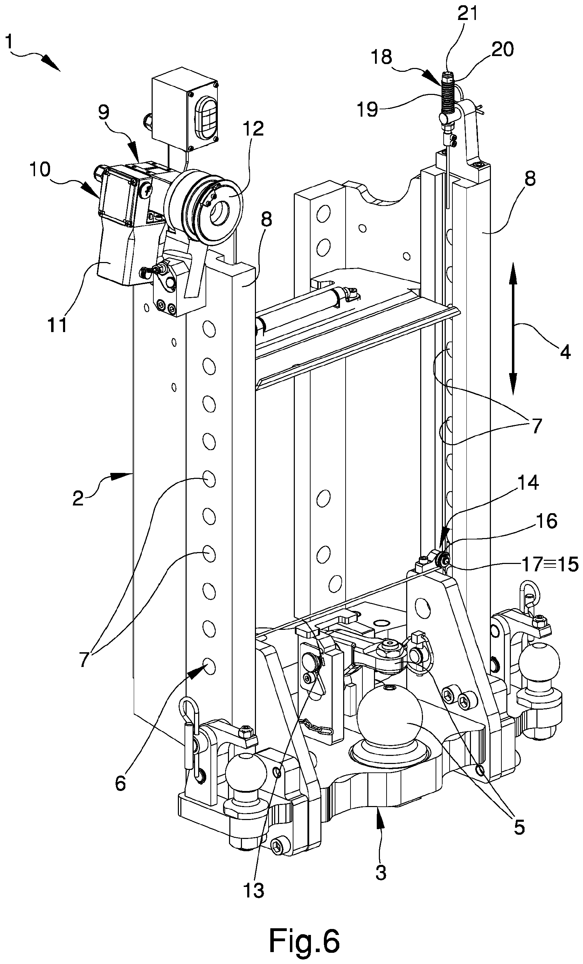

In the second embodiment shown in Figure 6, the anchoring means 14 comprise only the supporting elements 17, of the type described for the first embodiment. In this embodiment the supporting elements 17 therefore correspond to the attachment elements 15 and define the abutment surface 16 adapted to transfer the motion from the pulling element 13 to the attachment portion 3. Conveniently, in all embodiments illustrated in the figures, the pulling element 13 is removable from the anchoring means 14.

Advantageously, the device 1 comprises cushioning means 18 supported by the base frame 2 and associated with the pulling element 13, the purpose of which is to compensate for the tensioning of the pulling element 13 in the event of the attachment portion 3 being jammed or locked while the electric motor 11 is operated: this allows avoiding overloading the electric motor 11 itself under such conditions.

More in detail, the cushioning means 18 comprise elastic means 19, e.g. of the type of a spring.

In the embodiments shown in the Figures 1, 3, 4, 5 and 6, the cushioning means 18 comprise means for adjusting the preload of the elastic means 19, e.g., of the type of a nut 20 which engages on a threaded element 21 and which operates in conjunction with the elastic means 19, in such a way that, by screwing and unscrewing the nut 20, the preload of the elastic means is increased and decreased, respectively.

The possibility of adopting different components to cushion the tensioning of the pulling element 13, such as e.g. torque limiters, clutches, brakes or self-locking motors cannot however be ruled out.

Conveniently, the actuating assembly 9 is movable with respect to the base frame 2 between at least one work position and at least one home position.

It must be specified that, in the present treatise, "work position" means a position of the actuating assembly 9 such as to allow the pulling element 13 to be tensioned; "home position", on the other hand, means a position of the actuating assembly 9 such as to allow the pulling element 13 to be loosened and to be removed from/fitted onto the anchoring means 14.

In the specific embodiments illustrated in Figures 1, 4, 5 and 6, the actuating assembly 9 is hinged to the base frame 2 and is movable by means of a rotation between the work position and the home position.

In an alternative embodiment, not shown in the illustrations, the actuating assembly 9 can be associated with the base frame 2 in a sliding manner to move it from the work position to the home position and vice versa.

More particularly, the actuating assembly 9 can be associated with the base frame 2 e.g. by means of a slide connection.

More in detail, the actuating assembly 9, when it is arranged in the home position, is located at a lower level than when it is arrange instead in a work position, so as to loosen the pulling element 13 and allow the easy assembly and disassembly.

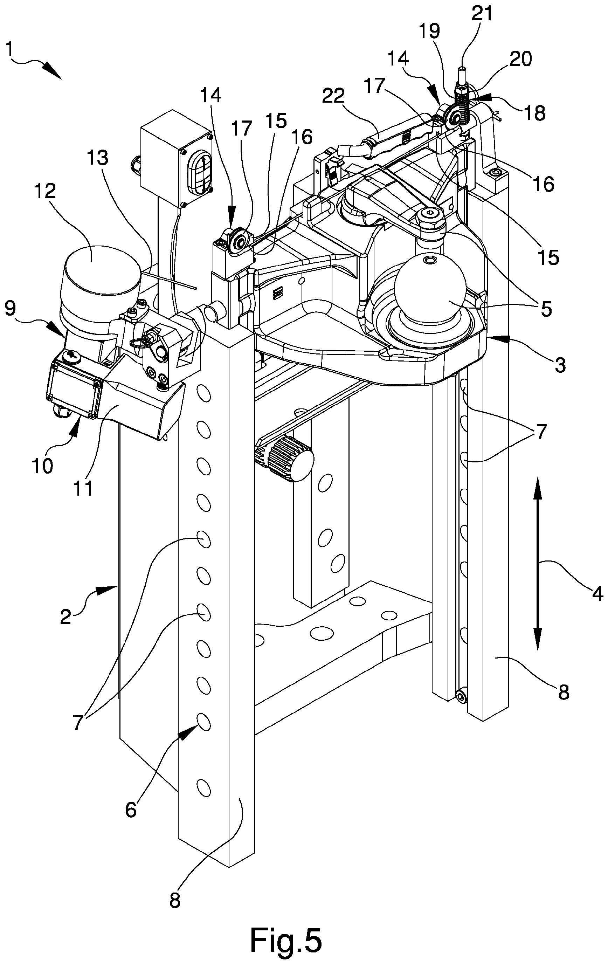

More specifically, in the examples of embodiments of the present treatise, the work position is illustrated in Figures 1, 4 and 6 and the home position in Figure 5, nevertheless, the possibility of placing the actuating assembly 9 in different work and home positions cannot be ruled out, or else the positions could coincide or be more than two.

Appropriately, the attachment portion 3 is also provided with a gripping tool 22, which allows manually moving the attachment portion 3 in case of need.

The operation of the invention, according to the application examples shown in the figures, is as follows.

Once the attachment portion 3 has been positioned on the base frame 2, the actuating assembly 9 is brought to home position, as shown in Figure 5, in order to make it possible to fit the pulling element 13.

The pulling element 13, having one extremity associated with the rotating element 12 and the opposite extremity associated with the cushioning means 18, is therefore engaged with the attachment portion 3 by means of the anchoring means 14.

More in particular, in the first embodiment, the pulling element 13 engages with the supporting elements 17 and is inserted inside the attachment elements 15, while in the second embodiment it engages only with the supporting elements 17.

The actuating assembly 9 is then placed in the work position, which, being raised with respect to the home position, puts the pulling element 13 into tension.

When the electric motor 11 is operated, the pulling element 13 is now wound further around the rotating element 12, increasing its tension and lifting the attachment portion 3 to the desired position.

As soon as the electric motor 11 is started, the tension of the pulling element 13 increases abruptly, but this effect is reduced by the presence of the cushioning means 18.

In fact, the moment the electric motor 11 is started, the tension of the pulling element 13 increases suddenly and pulls down the threaded element 21 and the nut 20.

This way, the elastic means 19 (which are of the type of a spring in Figures 1, 3, 4, 5 and 6) compress and cushion the tensioning of the pulling element 13.

If necessary, the nut 20 can be tightened to increase the compression of the elastic means 19, or else loosened to reduce the compression thereof: this way, a greater or lesser stiffness of the elastic means 19 is determined respectively, and therefore a lesser or greater cushioning effect.

The electric motor 11 can also wind the pulling element 13 to lower the attachment portion 3 according to need.

During the movement of the attachment portion 3, the weight of the latter is discharged on the supporting elements 17 and, in the embodiment in Figures 1, 2, 4 and 5, also on the attachment elements 15.

When the attachment portion 3 is in the desired position, the electric motor 11 maintains this position until the operator operates the blocking elements bringing them to an extended configuration, so as to insert them into the relative holes 7.

The operator can also manually move the attachment portion 3 thanks to the gripping tool 22.

In the embodiment shown in Figure 6, the device 1 is without the gripping tool 22, so it is not possible to manually support the attachment portion 3 during the operation of the blocking means.

In this embodiment, the actuating assembly 9 therefore allows the attachment portion 3 to be kept independently lifted, thus considerably simplifying the task of the operator in operating the blocking means.

In case the need arises to replace the attachment portion 3 with a different type, the actuating assembly 9 will have to be rotated to home position, which, being lowered with respect to the work position, loosens the tension on the pulling element 13.

At this point, the pulling element 13 must be released from the anchoring means 14, and therefore from the attachment portion 3, so as to be able to remove the latter and replace it with another.

From this point on, the same operations described above must be repeated.

It has in practice been ascertained that the described invention achieves the intended objects.

In particular, the fact is underlined that the present device for the connection of a towing vehicle to a trailer permits considerably facilitating the movement of the attachment portion with respect to the connection devices of known type, thus eliminating the need for a heavy physical effort and the risk of causing accidents and physical problems for the operator.

In addition, the present device is flexible, because it can also be used by people of slight build, by women and in general by any person regardless of their physical strength.

In addition, the operation of the blocking means of the attachment portion to the base frame is made easier, since it is now possible to move them without having to bear the full weight of the attachment portion at the same time.

The device to which the present invention relates also makes it possible to replace the attachment portion without having to remove the actuating assembly.

## Claims

1. Device (1) for the connection of a towing vehicle to a trailer, comprising:
- at least one base frame (2) associable with a towing vehicle;
- at least one attachment portion (3) which is adapted to engage with a trailer and associated movable in a sliding manner with said base frame (2) along at least one adjustment direction (4);
- detachable blocking means for blocking the position of said attachment portion (3) with said base frame (2) along said adjustment direction (4);
**characterized by** the fact that it comprises at least one actuating assembly (9) of said attachment portion (3) associated with said base frame (2) and provided with motor means (10) kinematically connected to said attachment portion (3) to command the movement thereof along said adjustment direction (4).

2. Device (1) according to claim 1, **characterized by** the fact that said motor means (10) comprise at least one electric motor (11).

3. Device (1) according to one or more of the preceding claims, **characterized by** the fact that said actuating assembly (9) comprises at least one rotating element (12) operatively connected to said motor means (10) and by the fact that it comprises at least one pulling element (13) associated with said rotating element (12) and adapted to operate in conjunction with said attachment portion (3), said rotating element (12) being actuatable in rotation around a relative axis by said motor means (10) to wind/unwind said pulling element (13).

4. Device (1) according to claim 3, **characterized by** the fact that said attachment portion (3) comprises anchoring means (14) of said pulling element (13).

5. Device (1) according to claim 4, **characterized by** the fact that said anchoring means (14) comprise at least one attachment element (15) locked together with said attachment portion (3) and defining at least one abutment surface (16) against which rests said pulling element (13) during the winding controlled by said rotating element (12).

6. Device (1) according to claim 4 or 5, **characterized by** the fact that said pulling element (13) is removable from said anchoring means (14).

7. Device according to one or more of claims from 4 to 6, **characterized by** the fact that said anchoring means (14) comprise at least one supporting element (17) associated movable in rotation with said attachment portion (3) around a relative axis and adapted to engage with said pulling element (13), said supporting element (17) rotating around the relative axis as a result of the winding/unwinding of the pulling element (13) itself.

8. Device (1) according to one or more of the preceding claims, **characterized by** the fact that it comprises cushioning means (18) supported by said base frame (2) and associated with said pulling element (13).

9. Device (1) according to claim 8, **characterized by** the fact that said cushioning means (18) comprise elastic means (19).

10. Device (1) according to one or more of the preceding claims, **characterized by** the fact that said actuating assembly (9) is moveable with respect to said base frame (2) between at least one work position and at least one home position.

11. Device (1) according to one or more of the preceding claims, **characterized by** the fact that said actuating assembly (9) is hinged to said base frame (2) and is movable in rotation between said work position and said home position.

12. Device (1) according to claim 10 or 11, **characterized by** the fact that said actuating assembly (9) is arranged, in said home position, at a lower level with respect to said work position, so as to loosen said pulling element (13).

13. Device (1) according to claim 10, **characterized by** the fact that said actuating assembly (9) is associated sliding with said base frame (2) to move it from said work position to said home position and vice versa.
